# EUROPÄISCHE PATENTANMELDUNG

(11) **EP 4 521 599 A1**
(43) Veröffentlichungstag der Anmeldung: **12.03.2025**
(21) Anmeldenummer: 24188535.9
(22) Anmeldetag: 15.07.2024
(51) Int. Cl.: H02J 50/10, H04R 25/00

(54) **VERFAHREN ZUM BETRIEB EINES INDUKTIVEN LADEGERÄTS EINES HÖRGERÄTS UND INDUKTIVES LADEGERÄT EINES HÖRGERÄTS**

(30) Priorität: 28.07.2023 DE 102023207237
(71) Anmelder: Sivantos Pte. Ltd., Singapore 539775 (SG)
(72) Erfinder: NARAMPANAWE, Nishshanka Bandara, 539775 Singapur (SG); ONG, Chuan En Andrew, 539775 Singapore (SG); WEIJAND, Koen, ES-03580 L Alfàs del Pi (ES)
(74) Vertreter: FDST Patentanwälte

(57) **Zusammenfassung**

Die Erfindung betrifft ein Verfahren (60) zum Betrieb eines induktiven Ladegeräts (22) eines Hörgeräts (4), welches eine Spannungsquelle (26) und einen damit verbundenen Schwingkreis (28) mit einer Ladespule (30) und einer Kapazität (32) umfasst, die einen Hauptkondensator (34) und einen hierzu parallel geschalteten Einstellzweig (38) aufweist. Für unterschiedliche Zustände (66) des Einstellzweigs (38), die sich anhand der Kapazität des Einstellzweigs (38) unterscheiden, wird ein einen durch die Ladespule (30) resultierenden elektrischen Strom kennzeichnenden Wert (70) erfasst. Derjenige Zustand (66) wird bestimmt, bei dem der zu dem Wert (70) korrespondierende elektrische Strom maximal ist, und der Einstellzweig (38) wird entsprechend des Zustands (66) eingestellt. Die Erfindung betrifft ferner ein induktives Ladegerät (22) sowie ein System (2).

## Beschreibung

Die Erfindung betrifft ein Verfahren zum Betrieb eines induktiven Ladegeräts eines Hörgeräts sowie ein induktives Ladegerät eines Hörgeräts. Das induktive Ladegerät weist eine Spannungsquelle und einen damit verbundenen Schwingkreis auf. Ferner betrifft die Erfindung ein System mit einem induktiven Ladegerät und einem Hörgerät.

Personen, die unter einer Verminderung des Hörvermögens leiden, verwenden üblicherweise ein Hörhilfegerät, das ein Hörgerät ist. Hierbei wird meist mittels eines Mikrofons, also eines elektromechanischen Schallwandlers, ein Umgebungsschall in ein elektrisches (Audio-/Schall-)Signal gewandelt, sodass das elektrische Signal erfasst wird. Die erfassten elektrischen Signale werden mittels einer Verstärkerschaltung bearbeitet und mittels eines weiteren elektromechanischen Wandlers in Form eines Hörers in den Gehörgang der Person eingeleitet. Meist erfolgt zudem eine Bearbeitung der erfassten Schallsignale, wofür üblicherweise ein Signalprozessor der Verstärkerschaltung verwendet wird. Hierbei ist die Verstärkung auf einen etwaigen Hörverlust des Hörgeräteträgers abgestimmt. Die (Schall- )Wandler und die Verstärkerschaltung sind in einem Gehäuse angeordnet und auf diese Weise vor Umwelteinflüssen zumindest teilweise geschützt.

Zur Bestromung der einzelnen Komponenten des Hörhilfegeräts, wie der Verstärkerschaltung und der Schallwandler, wird zumeist eine Batterie verwendet. Diese ist zum Beispiel als austauschbare Sekundärbatterie ausgestaltet, die aus dem Gehäuse entnommen und außerhalb des Gehäuses geladen werden kann. Infolgedessen ist es erforderlich, dass das Gehäuse eine Mindestgröße aufweist, damit eine manuelle Entnahme der Batterie ermöglicht ist. Bei einer weiteren Verringerung der Baugröße des Gehäuses ist eine derartige Entnahme nicht mehr möglich. In diesem Fall ist die Batterie fest verbaut und wird innerhalb des Gehäuses geladen. Damit hierbei möglichst wenige Öffnungen in dem Gehäuse vorhanden sind, durch die beispielsweise Fremdpartikel in das Gehäuse eintreten können, ist in zunehmendem Maße eine Ladeeinheit in dem Gehäuse vorgesehen, die eine Empfangsspule aufweist. Diese wird zum Laden der Batterie mittels eines externen Ladegeräts induktiv erregt, sodass ein kabelloses Laden der Batterie und somit des Hörhilfegeräts erfolgt.

Das Ladegerät weist üblicherweise einen Schwingkreis auf, der mit einer Spannungsquelle verbunden ist. Mittels dieser erfolgt bei Betrieb eine Erregung des Schwingkreises, sodass mittels dessen ein Wechselstrom geführt wird. Infolgedessen bildet sich ein zeitlich veränderliches Magnetfeld aus, das in der Empfangsspule einen Wechselstrom induziert, der zum Laden der Batterie verwendet wird. Damit die zwischen dem Ladegerät und dem Hörgerät übertragende Energiemenge möglichst groß ist, wobei ein Ladevorgang vergleichsweise kurz und Verluste möglichst geringe sind, ist es erforderlich, dass die Frequenz des erstellten Magnetfelds gleich der Eigenfrequenz des Schwingkreises des Ladegeräts sowie gleich der Eigenfrequenz eines teilweise mittels der Empfangsspule gebildeten weiteren Schwingkreises der Ladeeinheit ist.

Die Eigenfrequenz des Schwingkreises des Ladegeräts wird dabei anhand der Induktivität einer Ladespule des Schwingkreises sowie der Kapazität eines Kondensators des Schwingkreises vorgegeben. Aufgrund von Fertigungstoleranzen bei diesen Bauteilen ist es jedoch möglich, dass die Eigenfrequenz des Schwingkreises verschoben ist. Falls die Verschiebung vergleichsweise groß ist, ist die von dem Hörgerät aufgenommen Energiemenge vergleichsweise gering, sodass das Ladegerät im Wesentlichen nicht zum Laden des Hörgeräts verwendet werden kann.

Zur Abhilfe hiervon ist es beispielsweise möglich, Bauteile mit vergleichsweise geringen Fertigungstoleranzen zu wählen, was Herstellungskosten jedoch erhöht.

Alternativ wird nach Fertigung jedes Ladegeräts die Eigenfrequenz des jeweiligen Schwingkreises ermittelt und mit der gewünschten Eigenfrequenz verglichen. Falls die Abweichung zu groß ist, wird beispielsweise das Ladegerät aussortiert und nicht weiterverwendet. Alternativ hierzu wird beispielsweise der Kondensator ausgebaut und durch einen anderen ersetzt. Bei einer Alternative wird ein weiterer Kondensator eingebaut, der elektrische in Reihe oder parallel zu dem Kondensator geschaltet ist, sodass die Eigenfrequenz verschoben wird. Bei beiden Varianten ist eine zusätzlicher Montageschritt, also eine mechanische Änderung des bereits erstellten Ladegeräts erforderlich, was ebenfalls Herstellungskosten erhöht. Auch ist es bei dem neu montierten Kondensator möglich, dass dieser aufgrund von Fertigungstoleranzen eine ungünstige Kapazität aufweist, sodass eine erneute Nachbearbeitung erforderlich ist.

Der Erfindung liegt die Aufgabe zugrunde, ein besonders geeignetes Verfahren zum Betrieb eines induktiven Ladegeräts eines Hörgeräts sowie ein besonders geeignetes induktives Ladegerät eines Hörgeräts als auch ein besonders geeignetes System mit einem induktiven Ladegerät und einem Hörgerät anzugeben, wobei insbesondere auftretende elektrische Verluste reduziert sind, und wobei zweckmäßigerweise Herstellungskosten reduziert und vorzugsweise ein Wirkungsgrad erhöht ist.

Hinsichtlich des Verfahrens wird diese Aufgabe durch die Merkmale des Anspruchs 1, hinsichtlich des induktiven Ladegeräts durch die Merkmale des Anspruchs 3 und hinsichtlich des Systems durch die Merkmale des Anspruchs 9 gelöst. Vorteilhafte Weiterbildungen und Ausgestaltungen sind Gegenstand der jeweiligen Unteransprüche.

Das Verfahren dient dem Betrieb eines induktiven Ladegeräts eines Hörgeräts. Das induktive Ladegerät, das im Weiteren auch lediglich als Ladegeräts bezeichnet wird, ist dabei kein Bestandteil des Hörgeräts, sondern dient dem Laden des Hörgeräts. Dabei ist das Ladegerät hierfür insbesondere nicht nur lediglich geeignet, sondern auch vorgesehen und eingerichtet. Zum Beispiel weist das Ladegerät eine Halterung für das Hörgerät auf, mittels dessen das Hörgerät bei dem Ladevorgang zeitweise gehalten wird oder werden kann. Vorzugsweise ist die Halterung mittels einer Mulde oder Kuhle gebildet, in die das Hörgerät eingelegt werden kann. Nach Abschluss des Ladevorgang ist es dabei möglich, das Hörgerät von dem Ladegerät zu beabstandeten und diese insbesondere getrennt zu verwenden.

Beispielsweise ist das Hörgerät ein Kopfhörer oder umfasst einen Kopfhörer, und das Hörgerät ist zum Beispiel ein Headset. Besonders bevorzugt ist das Hörgerät jedoch ein Hörhilfegerät. Das Hörhilfegerät dient der Unterstützung einer unter einer Verminderung des Hörvermögens leidenden Person. Mit anderen Worten ist das Hörhilfegerät ein medizinisches Gerät, mittels dessen beispielsweise ein partieller Hörverlust ausgeglichen wird. Das Hörhilfegerät ist beispielsweise ein "Receiver-in-the-canal"-Hörhilfegerät (RIC; Ex-Hörer-Hörhilfegerät), ein Im-Ohr-Hörhilfegerät, wie ein "in-the-ear"-Hörhilfegerät, ein "in-the-canal"-Hörhilfegerät (ITC) oder ein "complete-in-canal"-Hörhilfegerät (CIC), eine Hörbrille, ein Taschenhörhilfegerät, ein Knochenleitungs-Hörhilfegerät oder ein Implantat. Alternativ ist das Hörhilfegerät ein Hinter-dem-Ohr-Hörhilfegerät ("Behind-the-Ear"-Hörhilfegerät), das hinter einer Ohrmuschel getragen wird.

Das Hörgerät ist vorgesehen und eingerichtet, am menschlichen Körper getragen zu werden. Mit anderen Worten umfasst das Hörgerät bevorzugt eine Haltevorrichtung, mittels deren eine Befestigung am menschlichen Körper möglich ist. Sofern es sich bei dem Hörgerät um ein Hörhilfegerät handelt, ist das Hörgerät vorgesehen und eingerichtet, beispielsweise hinter dem Ohr oder innerhalb eines Gehörgangs angeordnet zu werden. Insbesondere ist das Hörgerät kabellos und dafür vorgesehen und eingerichtet, zumindest teilweise in einen Gehörgang eingeführt zu werden.

Das Hörgerät umfasst zum Beispiel ein Mikrofon, das dem Erfassen von Schall dient. Insbesondere wird bei Betrieb mittels des Mikrofons ein Umgebungsschall erfasst, oder zumindest ein Teil hiervon. Bei dem Mikrofon handelt es sich insbesondere um einen elektromechanischen Schallwandler. Das Mikrofon weist beispielsweise lediglich eine einzige Mikrofoneinheit oder mehrere Mikrofoneinheiten auf, die miteinander wechselwirken. Jede der Mikrofoneinheiten weist zweckmäßigerweise eine Membran auf, die anhand von Schallwellen in Schwingungen versetzt wird, wobei die Schwingungen mittels eines entsprechenden Aufnahmegeräts, wie eines Magneten, der in einer Spule bewegt wird, in ein elektrisches Signal gewandelt wird. Somit ist es möglich, mittels der jeweiligen Mikrofoneinheit ein Audiosignal zu erfassen, das auf dem auf die Mikrofoneinheit auftreffendem Schall basiert. Die Mikrofoneinheiten sind insbesondere omnidirektional ausgestaltet. Das Mikrofon ist zweckmäßigerweise zumindest teilweise innerhalb eines Gehäuses des Hörgeräts angeordnet und somit zumindest teilweise geschützt.

Zweckmäßigerweise weist das Hörgerät einen Hörer zum Ausgeben eines Ausgabesignals auf. Das Ausgabesignal ist hierbei insbesondere ein elektrisches Signal. Der Hörer ist ein elektromechanischer Schallwandler, vorzugsweise ein Lautsprecher. Je nach Ausgestaltung des Hörgeräts ist im bestimmungsgemäßen Zustand der Hörer zumindest teilweise innerhalb eines Gehörgangs eines Trägers des Hörgeräts, also einer Person, angeordnet oder zumindest akustisch mit diesem verbunden. Das Hörgerät dient insbesondere hauptsächlich dem Ausgeben des Ausgabesignals mittels des Hörers, wobei ein entsprechender Schall erstellt wird. Mit anderen Worten ist die Hauptfunktion des Hörgeräts bevorzugt das Ausgeben des Ausgabesignals. Das Ausgabesignal ist dabei insbesondere zumindest teilweise in Abhängigkeit des mittels des Mikrofons erfassten Schalls erstellt.

Das Hörgerät umfasst zweckmäßigerweise einen Signalprozessor, der geeigneterweise eine Signalverarbeitungseinheit bildet oder zumindest ein Bestandteil hiervon ist. Zumindest jedoch umfasst das Hörgerät zweckmäßigerweise eine entsprechende Signalverarbeitungseinheit. Der Signalprozessor ist beispielsweise ein digitaler Signalprozessor (DSP) oder mittels analoger Komponenten realisiert. Mittels des Signalprozessors erfolgt insbesondere eine Anpassung des mittels des etwaigen Mikrofons erstellten (Audio-)Signals, vorzugsweise in Abhängigkeit eines etwaigen Hörverlust eines Trägers des Hörgeräts. Zweckmäßigerweise ist zwischen dem Mikrofon und der Signalverarbeitungseinheit, beispielsweise dem Signalprozessor, ein A/D-Wandler angeordnet, sofern der Signalprozessor als digitaler Signalprozessor ausgestaltet ist. Der Signalprozessor ist insbesondere in Abhängigkeit eines Parametersatzes eingestellt. Mittels des Parametersatzes wird dabei eine Verstärkung in unterschiedlichen Frequenzbereichen vorgegeben, sodass das mittels des Mikrofons erstellte Signal entsprechend bestimmter Vorgaben bearbeitet wird, insbesondere in Abhängigkeit eines Hörverlust des Trägers des Hörgeräts. Besonders bevorzugt umfasst das Hörgerät zusätzlich einen Verstärker, oder der Verstärker ist mittels des Signalprozessors zumindest teilweise gebildet. Beispielsweise ist der Verstärker signaltechnisch dem Signalprozessor vor- oder nachgeschaltet.

Das Hörgerät umfasst vorzugsweise eine Ladeeinheit, die insbesondere zum kabellosen Laden des Hörgeräts, zweckmäßigerweise einer Batterie des Hörgeräts, vorgesehen ist. Hierfür ist die Ladeeinheit im Montagezustand zweckmäßigerweise mit der Batterie elektrisch kontaktiert. Vorzugsweise handelt sich bei der Batterie um eine Sekundärbatterie, und/oder die Batterie dient dem Bestromen des etwaigen Hörers, Mikrofons und/oder der Signalverarbeitungseinheit. Insbesondere wird die Batterie im Wesentlichen zum Bestromen sämtlicher weiterer Bestandteile des Hörgeräts verwendet. Die Ladeeinheit dient insbesondere dem kabellosen Empfang von elektrischer Energie, sodass mittels der Ladeeinheit ein kabelloses Laden des Hörgeräts möglich ist, insbesondere ein sogenanntes "Wireless Charging". Dabei wechselwirkt die Ladeeinheit vorzugsweise mit dem Ladegerät.

Das Ladegerät weist eine Spannungsquelle auf, mittels derer eine (elektrische) Spannung, wie beispielsweise eine Gleichspannung oder besonders bevorzugt eine (elektrische) Wechselspannung bereitgestellt wird. Insbesondere ist die elektrische Spannung unter 60 V und beträgt beispielsweise 12 V oder 5 V. Zudem umfasst das Ladegerät einen Schwingkreis, der mit der Spannungsquelle verbunden ist. Somit ist es möglich, mittels der Spannungsquelle den Schwingkreis zu betreiben, wofür insbesondere ein elektrischer Strom von der Spannungsquelle in den Schwingkreis geleitet wird. Der Schwingkreis weist eine Ladespule auf, die insbesondere eine elektrische Spule ist. Folglich wird mittels der Ladespule eine bestimmte Induktivität bereitgestellt. Zudem weist der Schwingkreis eine Kapazität auf. Bevorzugt ist der Schwingkreis mittels der Ladespule und der Kapazität gebildet.

Die Kapazität weist einen Hauptkondensator auf. Ferner weist die Kapazität einen Einstellzweig auf, der elektrisch parallel zu dem Hauptkondensator geschaltet ist. Der Einstellzweig ist hierbei einstellbar, und mittels Einstellens des Einstellzweigs ist es hierbei möglich, die (Größe der) Kapazität des Einstellzweigs zu verändern. Dabei sind mehrere Zustände definiert, wobei bei jedem Zustand sich die Kapazität des Einstellzweigs unterscheidet. Insbesondere sind somit zumindest zwei unterschiedliche Einstellungen vorhanden, sodass der Einstellzweig zwei entsprechende Zustände aufweist. Da der Einstellzweig parallel zum Hauptkondensator des Schwingkreises geschaltet ist, ist somit auch bei unterschiedlichen Zuständen die Kapazität des Schwingkreises unterschiedlich. Folglich ist auch möglich, mittels Einstellung des Einstellzweigs die Eigenfrequenz des Schwingkreises zu verändern. Mit anderen Worten korrespondiert jeder der Zustände zu einer anderen Eigenfrequenz des Schwingkreises.

Beispielsweise ist die Kapazität lediglich mittels des Hauptkondensators sowie des Einstellzweigs gebildet. Besonders bevorzugt jedoch umfasst die Kapazität noch einen oder mehrere, vorzugsweise zwei, weitere Kondensatoren, die im weiteren als Nebenkondensatoren bezeichnet werden, und die insbesondere elektrisch in Reihe zu dem Hauptkondensator geschaltet sind. Mittels dieser ist es insbesondere möglich die bereitgestellte Kapazität zu erhöhen. Vorzugsweise ist eine elektrische Kapazität des Hauptkondensators zwischen 5 nF und 10 nF, und die etwaigen Nebenkondensatoren weisen beispielsweise eine Kapazität zwischen 1 nF und 5 nF auf. Vorzugsweise sind diese zueinander unterschiedlich ausgestaltet, sodass die Kapazität des Schwingkreises vergleichsweise frei gewählt werden kann.

Gemäß dem Verfahren wird für unterschiedliche Zustände des Einstellzweigs, insbesondere sämtliche Zustände des Einstellzweigs, ein Wert erfasst, der den aufgrund der geänderten Kapazität durch die Ladespule resultierenden elektrischen Strom kennzeichnet. Mit anderen Worten wird die Spannungsquelle betrieben und der Wert erfasst. Hierbei kennzeichnet der Wert den durch die Ladespule fließenden elektrischen Strom, der sich aufgrund der geänderten Kapazität unterscheidet. Vorzugsweise ist dabei eine eineindeutige Zuordnung des Stroms zu dem jeweiligen Wert gegeben. Geeigneterweise wird bei dem Erfassen des Werts die Spannungsquelle stets in gleicher Weise betrieben, sodass sich die unterschiedlichen elektrische Ströme und somit auch die unterschiedlichen Werte lediglich aufgrund der jeweils unterschiedlichen Kapazität ergeben.

In einem nachfolgenden Arbeitsschritt wird derjenige Zustand bestimmt, bei dem der zu dem Wert korrespondierende elektrische Strom maximal ist. Falls somit beispielsweise der kennzeichnende Wert im Wesentlichen dem elektrischen Strom entspricht oder direkt proportional ist, wird das Maximum der Werte ermittelt und der Zustand, bei dem dieser Wert erfasst wurde. Der elektrische Strom ist dabei, bei gleichem Betrieb der Spannungsquelle, umso größer, je geringer die Abweichung der Eigenfrequenz des Schwingkreises von dem für den Betrieb des Schwingkreises verwendeten Frequenzen ist, insbesondere der mittels der Frequenz der mittels der Spannungsquelle bereitgestellt Wechselspannung.

Im Anschluss hieran wird der Einstellzweig entsprechend des Zustands eingestellt, also des Zustands, bei dem der zu dem Wert korrespondierende elektrische Strom maximal war. Somit ist nunmehr der Schwingkreis derart eingestellt, dass bei einem Betrieb mit der Spannungsquelle der durch die Ladespule fließende elektrische Strom maximal ist. Somit ist ein vergleichsweise effizienter Betrieb des Schwingkreises und daher ein vergleichsweise effektives Energieübertragung zu dem Hörgerät möglich. Mit anderen Worten ist aufgrund der Einstellung der Kapazität die Eigenfrequenz des Schwingkreises auf die verwendete Spannungsquelle angepasst, sodass eine Effektivität bei einer Energieübertragung zu dem Hörgerät, also einem Laden des Hörgeräts, maximal und Verluste vergleichsweise gering sind. Somit ist ein Wirkungsgrad erhöht.

Hierbei ist es aufgrund der Einstellbarkeit des Einstellzweigs möglich, mit jedem Ladegerät vergleichsweise hohe elektrische Ströme zu realisieren, wobei für die Ladespule sowie die Kapazität des Schwingkreises jeweils Bauteile mit einer vergleichsweise hohen Fertigungstoleranz verwenden werden können, sodass Materialkosten und daher auch Herstellungskosten reduziert sind. Auch ist es möglich, im Wesentlichen jedes Ladegerät weiter zu verwenden, weswegen ein Ausschuss verringert ist. Dabei ist ein mechanisches Nachbearbeiten des Ladegeräts nicht erforderlich, weswegen Herstellungskosten ebenfalls vergleichsweise gering sind.

Beispielsweise wird als kennzeichnender Wert der elektrische Strom herangezogen. Besonders bevorzugt jedoch wird als kennzeichnender Wert eine elektrische Spannung herangezogen, die insbesondere über einen Messwiderstand abfällt. Auf diese Weise ist es möglich, einen vergleichsweise kostengünstigen Sensor zu verwenden, weswegen Herstellungskosten weiter reduziert sind. Der Messwiderstand ist dabei insbesondere gegen den Schwingkreis geführt und beispielsweise parallel zu dem Hauptkondensator oder einem weiteren Bestandteil des Schwingkreises, wie etwa dem oder einem der etwaigen Nebenkondensatoren.

Beispielsweise wird das Verfahren bei jedem Benutzen des Ladegeräts durchgeführt, beispielsweise bei einem Einschalten oder einem Start einer Bestromung, also insbesondere bei jeder erneuten Inbetriebnahme. Auf diese Weise werden insbesondere Alterungseffekte des Hauptkondensators sowie weitere Bestandteile des Ladegeräts berücksichtigt, weswegen das Ladegerät über einen langen Zeitraum eine vergleichsweise gute Funktionsweise aufweist. Alternativ hierzu wird das Verfahren in bestimmten zeitlichen Abständen ober bei Vorlage einer bestimmten Bedingung durchgeführt. Alternativ hierzu wird das Verfahren lediglich einmalig durchgeführt, beispielsweise nach oder zum Abschluss der Fertigung des Ladegeräts. Somit werden nach der mechanischen Fertigung die Fertigungstoleranzen der Bauteile ausgeglichen, und bei jeder Benutzung des Ladegeräts durch einen Nutzer ist dieses im Wesentlichen unverzüglich einsatzbereit. Auch ist es nicht erforderlich, dass ein Nutzer eine entsprechende Tätigkeit durchgeführt, was einen Komfort erhöht

Zum Beispiel wird die Einstellung des Einstellzweigs manuell vorgenommen, beispielsweise mittels mechanischer Betätigung eines mechanischen Schalters oder dergleichen, der zum Beispiel innerhalb eines Gehäuses des Ladegeräts angeordnet ist. Besonders bevorzugt jedoch erfolgt die Einstellung mittels einer Elektronik, des Ladegeräts, somit ist ein Aufwand verringert, und die Einstellung kann auch bei geschlossenem Gehäuse des Ladegeräts vorgenommen werden kann.

Zweckmäßigerweise wird nach dem Einstellen ein Ladevorgang des Hörgeräts gestartet. Somit wird zum Laden des Hörgeräts diejenigen Einstellung des Schwingkreises verwendet, bei der der Wirkungsgrad maximal ist, sodass der Ladevorgang des Hörgeräts vergleichsweise schnell abgeschlossen ist.

Das induktive Ladegerät ist zum Laden eines Hörgeräts geeignet, insbesondere vorgesehen und eingerichtet. Das induktive Ladegerät weist eine Spannungsquelle und einen damit verbundenen Schwingkreis mit einer Ladespule und einer Kapazität auf. Die Spannungsquelle weist dabei insbesondere einen Transformator oder Wechselrichter, der insbesondere mit einem Anschluss an ein Versorgungsnetz angeschlossen werden kann. Die Kapazität weist einen Hauptkondensator und einen hierzu parallelgeschalteten Einstellzweig auf. Hierbei weist der Einstellzweig mehrere Zustände auf, wobei jeder der Zustände mittels einer entsprechenden Einstellung des Einstellzweigs realisiert wird. Bei unterschiedlichen Zuständen ist dabei die resultierende Kapazität des Einstellzweigs unterschiedlich und somit auch des Schwingkreises. Mit anderen Worten ist bei jedem Zustand die dem Hauptkondensator parallelgeschaltete Kapazität unterschiedlich, sodass die resultierende Kapazität des Schwingkreises unterschiedlich ist. Somit es möglich, anhand der Einstellung des Einstellzweigs die Kapazität des Schwingkreises zu ändern. Mit anderen Worten weist bei jedem unterschiedlichen Zustand des Einstellzweigs der Schwingkreis eine andere Kapazität und daher auch eine andere Eigenfrequenz auf. Vorzugsweise umfasst die Kapazität zudem einen oder mehrere Nebenkondensatoren, die elektrisch in Reihe zu dem Hauptkondensator geschaltet sind, und die insbesondere nicht mit dem Einstellzweig überbrückt sind.

Das induktive Ladegerät ist gemäß einem Verfahren betrieben, bei dem für unterschiedliche Zustände des Einstellzweigs, die sich anhand der Kapazität des Einstellzweigs unterscheiden, ein einen durch die Ladespule resultierenden elektrischen Strom kennzeichnender Wert erfasst wird. Derjenige Zustand wird bestimmt, bei dem der zu dem Wert korrespondierende elektrische Strom maximal ist. Zudem wird der Einstellzweig entsprechend des Zustands eingestellt.

Insbesondere weist das Ladegerät ein Steuergerät auf, mittels dessen das Verfahren zumindest teilweise durchgeführt wird. Mit anderen Worten ist das Steuergerät geeignet, insbesondere vorgesehen und eingerichtet, das Verfahren durchzuführen. Das Steuergerät ist hierbei beispielsweise mittels diskreter Bauteile erstellt, oder das Steuergerät weist beispielsweise einen Mikrocontroller auf, der zweckmäßigerweise programmierbar ausgestaltet ist.

Beispielsweise weist der Einstellzweig einen einstellbaren Kondensator auf, der insbesondere elektrisch betätigbar ist. Besonders bevorzugt jedoch weist der Einstellzweig einen Einstellpfad mit einem Hilfskondensator und ein damit elektrisch in Reihe geschaltetes Schaltelement auf. Das Schaltelement ist insbesondere ein elektrischer Schalter, wie ein Transistor oder ein MOSFET. Alternativ hierzu ist das Schaltelement beispielsweise ein Thyristor, sodass ein Energiebedarf verringert ist. Mittels Einstellung des Schaltelements werden dabei zumindest zwei der Zustände definiert. Mit anderen Worten ist bei zumindest zwei der Zustände der Schaltzustand des Schaltelements unterschiedlich. Falls das Schaltelement elektrisch leitend ist, ist der Hilfskondensator elektrisch parallel zu dem Hauptkondensator geschaltet, sodass die Kapazität des Schwingkreises vergrößert ist. Falls hingegen das Schaltelement geöffnet ist, also sich in dem elektrisch nichtleitenden Zustand befindet, ist die Kapazität des Schwingkreises nicht vergrößert und beispielsweise lediglich mittels des Hauptkondensators und der etwaigen Nebenkondensatoren vorgegeben. Somit ist es mittels Ansteuerung des Schaltelements möglich, zumindest zwei der Zustände des Einstellzweigs durchzuschalten und auch den Einstellzweig entsprechend einzustellen, wofür zweckmäßigerweise keine manuelle Tätigkeit erforderlich ist. Somit ist ein Komfort erhöht, und es ist auch möglich, das Verfahren im Wesentlichen automatisiert durchzuführen.

Beispielsweise ist der Einstellzweig mittels des Einstellpfads gebildet. Besonders bevorzugt jedoch weist der Einstellzweig mehrere derartige zueinander elektrisch parallelgeschaltete Einstellpfade auf. Hierbei sind mittels der Schaltzustände der Schaltelemente insbesondere die Zustände definiert. Beispielsweise sind hierbei sämtliche Hilfskondensator zueinander baugleich. Besonders bevorzugt jedoch unterscheiden sich diese zueinander, sodass die Anzahl an unterschiedlichen Zuständen vergrößert ist. Insbesondere ist der oder jeder Einstellpfad parallel zu dem Hauptkondensator geschaltet. Beispielsweise umfasst der Einstellzweig 3, 4. 5 oder mehr derartige Einstellpfade. Zweckmäßigerweise ist die Anzahl der Einstellzweige geringer als 10. Vorzugsweise ist die Anzahl der Einstellzweige gleich 2. Somit ist eine Anzahl an benötigten Bauelementen und ein benötigter Platz vergleichsweise gering, weswegen Herstellungskosten reduziert sind.

Sofern somit zwei Einstellpfade vorhanden sind, deren Hilfskondensatoren zueinander unterschiedlich sind, sind insgesamt vier Zustände vorhanden. Anhand der vier unterschiedlichen Zustände ist es dabei möglich, die Kapazität des Schwingkreises vergleichsweise umfangreich zu verändern, sodass dessen Eigenfrequenz auf den gewünschten Wert angepasst werden kann, also insbesondere die Frequenz der mittels des Spannungsquelle bereitgestellte Wechselspannung.

Beispielsweise umfasst das Ladegerät einen Stromsensor zum Erfassen des Werts, zum Beispiel einen Hall-Sensor der im Bereich der Ladespule angeordnet ist. Besonders bevorzugt jedoch umfasst das induktive Ladegerät einen Spannungssensor zum Erfassen des Werts. Mit anderen Worten ist der Wert eine elektrische Spannung, nämlich bevorzugt eine über einen Messwiderstand anfallende elektrische Spannung. Insbesondere ist der Messwiderstand elektrisch parallel zu einem der etwaigen ist Nebenkondensatoren geschaltet. Der Messwiderstand ist dabei elektrisch in Reihe mit einer gegen den Schwingkreis geführten Diode geschaltet. Über die Diode wird somit lediglich eine Halbwelle der jeweiligen elektrischen Spannung / des elektrischen Stroms weitergeleitet. Mittels der Diode erfolgt somit eine Gleichrichtung, sodass lediglich eine Polarität der elektrischen Spannung weiterverarbeitet wird, weswegen eine Konstruktion des Spannungssensors vereinfacht ist. Somit sind Herstellungskosten weiter reduziert. Zusammenfassend ist der Spannungssensor zum Erfassen des Werts vorhanden, nämlich zum Messen der über den Messwiderstand anfallende elektrische Spannung, der elektrisch in Reihe mit der gegen den Schwingkreis geführten Diode geschaltet ist. Der Messwiderstand ist dabei insbesondere ein ohmscher Widerstand, oder beispielsweise ein Bestandteil eines Shunts.

Beispielsweise sind lediglich der Spannungssensor, der Messwiderstand sowie die Diode vorhanden. Besonders bevorzugt jedoch ist parallel zu dem Messwiderstand ein Messkondensator geschaltet. Dieser dient dem Glätten der über den Messwiderstand anfallenden elektrischen Spannung. Infolgedessen treten in dem Wert keine oder lediglich verringert Schwankungen auf, sodass das Weiterverarbeiten, insbesondere das Bestimmen des Maximums, erleichtert ist.

Beispielsweise ist die Diode direkt gegen den Schwingkreis geführt. Besonders bevorzugt jedoch ist die Diode über einen Spannungsteiler gegen den Schwingkreis geführt. Somit fällt über den Messwiderstand lediglich eine vergleichsweise geringe elektrische Spannung an, weswegen eine Belastung der Bauteile verringert ist. Somit können kostengünstige Bauteile verwendet werden. Auch sind bei auf lediglich eine geringe Belastung ausgelegten Bauteilen Schwankung verringert, was eine Genauigkeit erhöht. Insbesondere ist der Spannungsteiler elektrisch parallel zu einem der etwaigen Nebenkondensatoren geschaltet.

Das System weist ein Hörgerät sowie ein induktives Ladegerät auf. Das Hörgerät ist beispielsweise ein Headset oder ein Kopfhörer. Besonders bevorzugt ist das Hörgerät ein Hörhilfegerät und dient der Unterstützung einer unter einem zumindest teilweisen Hörverlust leidenden Person. Alternativ hierzu dient das Hörgerät insbesondere als sogenannter Tinnitusmasker, also insbesondere der Behandlung eines Tinnitus. Zum Beispiel ist das Hörhilfegerät ein "Receiver-in-the-canal"-Hörhilfegerät (RIC; Ex-Hörer-Hörhilfegerät), ein Im-Ohr-Hörhilfegerät, wie ein "in-the-ear"-Hörhilfegerät, ein "in-the-canal"-Hörhilfegerät (ITC) oder ein "complete-in-canal"-Hörhilfegerät (CIC), eine Hörbrille, ein Taschenhörhilfegerät, ein Knochenleitungs-Hörhilfegerät oder ein Implantat. Alternativ ist das Hörhilfegerät ein Hinter-dem-Ohr-Hörhilfegerät ("Behind-the-Ear"-Hörhilfegerät), das hinter einer Ohrmuschel getragen wird.

Das Hörgerät weist vorzugsweise eine Batterie auf, mittels derer bei Betrieb insbesondere eine Bestromung von weiteren Bauteilen des Hörgeräts erfolgt. Vorzugsweise ist die Batterie eine Sekundärbatterie und geeigneterweise fest, also insbesondere unlösbar, in einem Gehäuse des Hörgeräts verbaut. Zudem weist das Hörgerät geeigneterweise eine Ladeeinheit auf, die dem Laden des Hörgeräts, insbesondere der Batterie, dient. Hierfür ist die Ladeeinheit geeignet, insbesondere vorgesehen und eingerichtet. Die Ladeeinheit ist insbesondere zum kabellosen Laden geeignet, zweckmäßigerweise vorgesehen und eingerichtet. Die Ladeeinheit ist geeigneterweise innerhalb des Gehäuses des Hörgeräts angeordnet. Die Ladeeinheit weist vorzugsweise eine Empfangsspule auf und ist beispielsweise elektrisch mit der Batterie kontaktiert, vorzugsweise direkt.

Das Ladegerät umfasst eine Spannungsquelle und einen damit verbundenen Schwingkreis mit einer Ladespule und einer (elektrischen) Kapazität, die einen Hauptkondensator und einen hierzu parallel geschalteten Einstellzweig aufweist. Das Ladegerät ist gemäß einem Verfahren betrieben, bei dem für unterschiedliche Zustände des Einstellzweigs, die sich anhand der Kapazität des Einstellzweigs unterscheiden, ein einen durch die Ladespule resultierenden elektrischen Strom kennzeichnenden Wert erfasst wird. Derjenige Zustand wird bestimmt, bei dem der zu dem Wert korrespondierende elektrische Strom maximal ist, und der Einstellzweig wird entsprechend des Zustands eingestellt.

Insbesondere ist es möglich, das Hörgerät und das induktive Ladegerät induktiv zu koppeln. Beispielsweise weist das Ladegerät eine Halterung zur zumindest temporären Befestigung des Hörgeräts auf, vorzugsweise während eines Ladevorgangs.

Die im Zusammenhang mit dem Verfahren erläuterten Weiterbildungen und Vorteile sind sinngemäß auch auf das Verfahren / das Hörgerät unter untereinander zu übertragen und umgekehrt.

Nachfolgend wird ein Ausführungsbeispiel der Erfindung anhand einer Zeichnung näher erläutert. Darin zeigen:
- Fig. 1: einen schematisch vereinfachten Schaltplan eines Systems mit einem Hörgerät und einem induktiven Ladegerät, und
- Fig. 2: ein Verfahren zum Betrieb eines induktiven Ladegeräts.

Einander entsprechende Teile sind in allen Figuren mit den gleichen Bezugszeichen versehen.

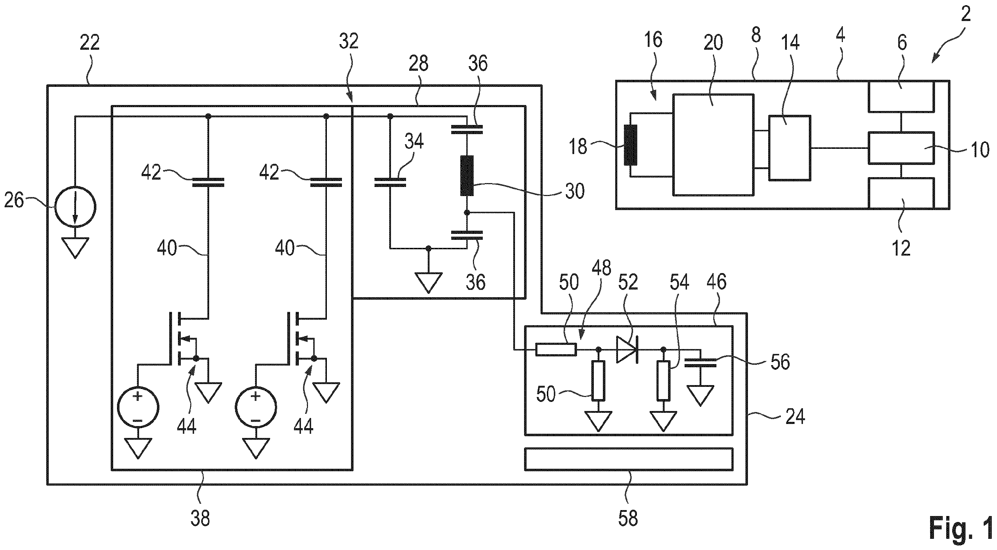

In Figur 1 ist schematisch ein vereinfachter Schaltplan eines Systems 2 dargestellt, das ein Hörgerät 4 umfasst. Das Hörgerät 4 ist ein Hörhilfegerät und dient einem nicht näher dargestellten Nutzer zur Unterstützung bei einem zumindest teilweisen Hörverlust. Hierfür weist das Hörgerät 4 ein Mikrofon 6 auf, das akustisch mit einer nicht näher dargestellten Öffnung eines Hörgerätegehäuses 8 gekoppelt ist. Signaltechnisch mit dem Mikrofon 6 ist eine Signalverarbeitungseinheit 10 verbunden, die einen nicht näher dargestellten digitalen Signalprozessor (DSP) aufweist. Mittels der Signalverarbeitungseinheit 10 werden bei Betrieb die mittels des Mikrofons 6 bereitgestellten elektrischen Signale geeignet bearbeitet, um den Hörverlust des Nutzers auszugleichen und etwaige Störgeräusche herauszufiltern. Mit der Signalverarbeitungseinheit 10 ist ein Hörer 12 signaltechnisch verbunden, der akustisch mit einer weiteren Öffnung des Hörgerätegehäuses 8 verbunden ist. Über diese werden mittels des Hörers 12 erstellte Schallwellen aus dem Hörgerätegehäuse 8 geleitet. Im bestimmungsgemäßen Zustand des Hörgeräts 4 ist das Hörgerätegehäuse 8 in einen Gehörgang des Nutzers eingeführt, wobei sich die Öffnung des Hörgerätegehäuses 8, mit der das Mikrofon 6 akustisch gekoppelt ist, auf einer dem Trommelfell abgewandten Seite und die dem Hörer 12 zugeordnete Öffnung auf einer dem Trommelfell zugewandten Seite des Hörgerätegehäuses 8 befindet.

Zur Bestromung der Signalverarbeitungseinheit 10, mittels derer auch in das Mikrofon 6 und der Hörer 12 betrieben werden, weist das Hörgerät 4 eine in dem Hörgerätegehäuse 8 fest verbaute Batterie 14 auf. Das Hörgerät 4 umfasst eine ebenfalls in dem Hörgerätegehäuse 8 angeordnete Ladeeinheit 16 mit einer Empfangsspule 18, die elektrisch mit einer weiteren Einheit 20 der Ladeeinheit 16 elektrisch kontaktiert ist. Mittels der weiteren Einheit 20 wird ein Gleichrichter sowie ein Laderegler bereitgestellt, und diese ist mit der Batterie 14 elektrisch kontaktiert. Somit ist es möglich, die Batterie 14 induktiv zu laden, sodass, mit Ausnahme der für das Mikrofon 6 und den Hörer 12 vorgesehenen Öffnungen, keine weiteren Öffnungen in dem Gehäuse 8 erforderlich sind. Somit ist eine Dichtigkeit des Hörgeräts 4 vergleichsweise groß.

Zum Laden des Hörgeräts 4 umfasst das System 2 ein induktives Ladegerät 22, das auch lediglich als Ladegerät bezeichnet wird. Das Ladegerät 22 weist ein Gehäuse 24 auf, in dem eine Spannungsquelle 26 angeordnet ist. Mittels der Spannungsquelle 26 wird bei Betrieb eine elektrische Wechselspannung in Höhe von beispielsweise 12 V bereitgestellt. Hierfür umfasst die Spannungsquelle 26 einen nicht näher dargestellten Transformator, der über einen nicht näher dargestellten Stecker mit einem Wechselstromnetz als Versorgungsnetz verbindbar ist. Mit Ausnahme des Steckers ist dabei das Gehäuse 24 umlaufende durchgehend ausgestaltet, sodass dieses ebenfalls vergleichsweise dicht ist.

Mit der Spannungsquelle 26 ist ein Schwingkreis 28 verbunden, der elektrisch parallel zu der Spannungsquelle 26 geschaltet ist. Der Schwingkreis 28 weist eine Ladespule 30 auf, die eine elektrische Spule ist. Die Induktivität der Ladespule 30 beträgt in dem dargestellten Beispiel 96,4 nH. Ferner umfasst der Schwingkreis 28 eine Kapazität 32, die elektrisch in Reihe mit der Ladespule 30 geschaltet ist. Mittels dieser ist eine Eigenfrequenz des Schwingkreises 28 bestimmt. Wenn die Spannungsquelle 26 betrieben wird, wird der Schwingkreis 28 zum Schwingen angeregt, wobei die Frequenz des fließenden elektrischen Stroms anhand der angelegten Wechselspannung vorgegeben wird. Je näher die beiden Frequenzen übereinstimmen, desto größer ist der mittels des Schwingkreises 28 geführte elektrische Strom und desto stärker ist somit auch das mittels der lade Spule 30 erstellte zeitlich veränderliche Magnetfeld.

Die Kapazität 32 weist einen Hauptkondensator 34 auf, dessen Kapazität 6,6 nF beträgt. Elektrisch in Reihe zu dem Hauptkondensator 34 sind zwei Nebenkondensatoren 36 geschaltet, von denen einer eine Kapazität von 4,8 nF und der andere eine Kapazität von 2,8 nF aufweist. Falls die Ladespule 30 sowie die Kondensatoren 34, 36 keine Fertigungstoleranzen aufweisen würden, wäre die Resonanzfrequenz des Schwingkreis 28 insbesondere 13,556 MHz. Aufgrund von Fertigungstoleranzen bei diesen Bauteilen ist es jedoch möglich, dass die Eigenfrequenz des Schwingkreises 28 verschoben ist. Daher ist elektrisch parallel zu dem Hauptkondensator 28 parallel ein Einstellzweig 38 geschaltet, der zwei zueinander elektrisch parallelgeschaltete Einstellpfade 40 aufweist. Dabei ist jeder der Einstellpfade 40 parallel zu dem Hauptkondensator 34 geschaltet.

Jeder Einstellpfad 40 weist einen Hilfskondensator 42 auf, der elektrisch in Reihe mit einem Schaltelement 44 geschaltet ist. Die Kapazität der beiden Hilfskondensator en42 ist hierbei unterschiedlich und beträgt bei dem 0,47 nF und bei dem anderen 1,5 nF. Die beiden Schaltelemente 44 hingegen sind zueinander baugleich und jeweils mittels eines MOSFET gebildet, der mit einer geeigneten Ansteuerschaltung betrieben ist.

Ferner weist das Ladegerät 22 eine Messschaltung 46 auf, die parallel zu einem der Nebenkondensatoren 36, nämlich dem mit einer Kapazität von 2,8 nF geschaltet ist. Der Messschaltung 46 weist einen Spannungsteiler 48 mit zwei elektrisch in Reihe geschalteten Widerstände 65 auf. Der Spannungsteiler 48 ist dabei parallel zu dem entsprechenden Nebenkondensator 46 geschaltet, und einer der Widerstände 50 ist mit einer Reihenschaltung aus einer Diode 52 und einem Messwiderstand 54 überbrückt. Somit ist der Messwiderstand 54 elektrisch in Reihe mit der gegen den Schwingkreis 28 geführten Diode 52 geschaltet, wobei die Diode 52 über den Spannungsteiler 48 gegen den Schwingkreis 28 geführt ist. Parallel zu dem Messwiderstand 54 ist ein Messkondensator 56 geschaltet.

Die Messschaltung 46 weist ferner einen nicht näher dargestellten Spannungssensor zum Messen einer über den Messwiderstand 54 anfallenden elektrischen Spannung auf. Aufgrund der Diode 52 weist dabei die über den Messwiderstand 54 anfallende elektrische Spannung lediglich eine einzige Polarität auf, und die elektrische Spannung wird zudem mittels des Messkondensator 56 geglättet, sodass die anfallende elektrische Spannung im Wesentlichen eine Gleichspannung ist, obwohl mittels des Schwingkreis 28 bei Betrieb eine Wechselspannung geführt wird.

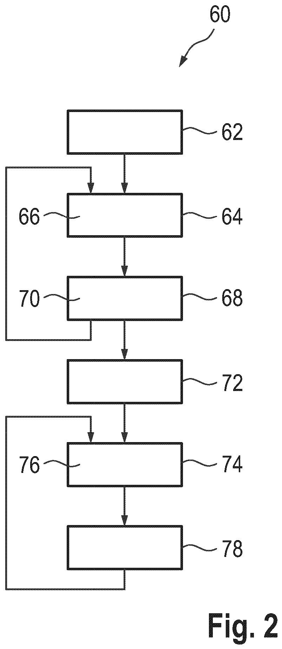

Ferner weist das Ladegerät 22 ein Steuergerät 58 auf, mittels dessen die Spannungsquelle 26, die Schaltelemente 44 gesteuert werden sowie der Spannungssensor ausgelesen wird. Dabei wird mittels des Steuergeräts 58 ein in Figur 2 dargestelltes Verfahren 60 zum Betrieb des induktiven Ladegeräts 22 zumindest teilweise durchgeführt. Mit anderen Worten ist das Ladegerät 22 gemäß dem Verfahren 60 betrieben, und das Steuergerät 58 ist vorgesehen und eingerichtet, das Verfahren 60 durchzuführen.

Das Verfahren 60 wird in einem ersten Arbeitsschritt 62 gestartet. Der erste Arbeitsschritt 62 wird nach Beendigung der Fertigung des Ladegeräts 22 durchgeführt, also wenn dieses mechanisch zusammengesetzt, jedoch noch nicht benutzt wurde. Somit wird dieser Teil des Verfahren 60 insbesondere in einer Fabrik oder beispielsweise bei einem Händler durchgeführt.

In einem sich anschließenden zweiten Arbeitsschritt 64 wird der Einstellzweig 38 entsprechend einem von vier vordefinierten Zuständen 66 eingestellt. In diesem Zustand 66 sind die beiden Schaltelemente 44 geöffnet, sodass die Einstellpfade 40 elektrisch aufgetrennt sind. Somit trägt die Größe der Kapazitäten der Hilfskondensatoren 42 nicht zu der Größe der Kapazität 32 des Schwingkreises 28 bei. Ferner wird die Spannungsquelle 26 betrieben und somit der Schwingkreis 28 angeregt. Infolgedessen fließt ein elektrischer Strom durch die Ladespule 30.

In einem sich anschließenden dritten Arbeitsschritt 68 wird ein Wert 70 erfasst, der den durch die Ladespule 30 resultierenden Strom kennzeichnet. Als kennzeichnender Wert 70 wird dabei die über den Messwiderstand 54 anfallende elektrische Spannung verwendet, die zudem mittels des Messkondensator 56 geglättet ist. Aufgrund der Gleichrichtung mittels der Diode 52 ist der Wert 70 dabei lediglich positiv. In diesem Beispiel ist daher der Wert 70 umso größer, je größer der mittels der Ladespule 30 geführte elektrische Strom ist.

Der Wert 70 wird gespeichert und anschließend erneut der zweite Arbeitsschritt 64 durchgeführt, wobei jedoch ein anderer Zustand 66 des Einstellzweigs 38 gewählt wird. In diesem ist eines der beiden Schaltelemente 44 geschlossen, sodass der diesem Einstellpfad 40 zugeordnete Hilfskondensator 42 zur Größe der Kapazität 32 des Schwingkreises 28 beiträgt. Infolgedessen ist die Eigenfrequenz des Schwingkreises 28 im Vergleich zur vorhergehenden Durchführung des zweiten Arbeitsschritts verändert, weswegen auch die Größe des mittels der Ladespule 30 geführten elektrischen Stroms verändert ist. Infolgedessen ist auch der in dem nachfolgend ausgeführten dritten Arbeitsschritt 68 erfasste Wert 70 verändert. Auch dieser wird gespeichert.

Im Anschluss hieran wird erneut der zweite Arbeitsschritt 64 durchgeführt, wobei wiederum ein veränderter Zustand 66 des Einstellpfads 38 verwendet wird. In diesen ist nunmehr das andere Schaltelemente 44 elektrisch leitfähig, und das ehemals elektrisch leitfähige Schaltelement 44 ist in den elektrisch nichtleitenden Zustand versetzt. Auch für diesen Zustand 66 wird in dem nachfolgend ausgeführten dritten Arbeitsschritt 68 der Wert 70 erfasst und abgespeichert.

Anschließend wird ein letztes Mal der zweite Arbeitsschritt 64 durchgeführt, wobei in der nun vorliegende Zustand 66 zu einer Einstellung des Einstellzweigs 38 korrespondiert, bei dem beide Schaltelemente 44 geschlossen, also elektrisch leitfähig, sind. Der Wert 70 wird nochmals erfasst und abgespeichert.

Dabei den verschiedenen Durchführungen des zweiten und dritten Arbeitsschritts 64, 68 die Größe der Kapazität 32 unterschiedlich war, war die Eigenfrequenz des Schwingkreises 28 jeweils unterschiedlich. Daher war der mittels der Ladespule 30 geführte elektrische Strom jeweils unterschiedlich, auch wenn die Spannungsquelle 26 stets in gleicher Art und Weise betrieben wird. Dabei ist der elektrische Strom umso größer, je geringer die Abweichung zwischen der Eigenfrequenz des Schwingkreises 28 und der Frequenz des mittels der Spannungsquelle 26 bereitgestellten Wechselspannung ist. Infolgedessen unterscheiden sich auch alle erfassten Werte 70. Zusammenfassend wird somit in dem zweiten und dritten Arbeitsschritt 64, 68 für die vier unterschiedlichen Zustände 66 des Einstellzweigs 38, die sich anhand der Kapazität des Einstellzweigs 38 unterscheiden, der den durch die Ladespule 30 resultierenden elektrischen Strom kennzeichnende Wert 70 erfasst. Dabei ist bei jeweils zweien der Zuständen 66 der Schaltzustand jeweils eines der beiden Schaltelemente 44 unterschiedlich. In einer nicht näher dargestellten Variante weist der Einstellzweig 38 mehr entsprechende Einstellpfade 40 auf, sodass auch die Anzahl der Zustände 66 vergrößert ist. Folglich wird auch der zweite und dritte Arbeitsschritt, 64, 68 öfters ausgeführt.

Sobald für sämtliche Zustände 66 der Werte 70 erfasst wurde, wird ein vierter Arbeitsschritt 72 durchgeführt. In diesem wird das Maximum der erfassten Werte 70 ermittelt, also der Wert 70, bei dem der korrespondierende elektrische Strom maximal war. Nachfolgend wird bestimmt, welcher der Zustände 66 zur diesem Wert 70 korrespondiert. Mit anderen Worten wird der Zustand 66 ermittelt, bei dem der Wert 70 maximal ist. Folglich wird derjenige Zustand 66 bestimmt, bei dem die Eigenfrequenz des Schwingkreises 28 am nächsten zu der Frequenz der mittels der Spannungsquelle bereitgestellte elektrische Spannung ist.

Der Einstellzweig 38 wird entsprechend dieses Zustands 66 eingestellt, also der Schaltzustand der beiden Schaltelemente 44 entsprechend gewählt. Hierfür wird insbesondere der entsprechende Schaltzustand der beiden Schaltelemente 44 in einem Speicher des Steuergeräts 58 abgespeichert, sodass bei einer erneuten Inbetriebnahme des Ladegeräts 22 im Wesentlichen unverzüglich die entsprechende Ansteuerung der Schaltelemente 44 erfolgen kann. Das Steuergerät 58 ist hierbei derart aufgebaut, dass, wenn der entsprechende Speicher beschrieben ist, bei einer Bestromung des Ladegeräts 22 die Schaltelemente 44 lediglich entsprechend dieser Einstellung angesteuert werden können. Im Anschluss ist der Teil des Verfahren 60, bei dem eine Einstellung des Ladegeräts 22 erfolgt, beendet.

Bei einem nachfolgenden fünften Arbeitsschritt 74 wird eine Annäherung des Hörgeräts 4 an das Ladegerät 22 mittels eines nicht näher dargestellten Sensors oder dergleichen erfasst. In diesem Fall wird ein Ladevorgang 76 gestartet. Hierfür wird mittels der Spannungsquelle 26 der Schwingkreis 28 angeregt, sodass mittels der Ladespule 30 ein zeitlich veränderliches Magnetfeld erstellt wird. Infolgedessen wird in der sich in der Nähe befindenden Empfangsspule 28 ein elektrischer Wechselstrom induziert, der mittels der weiteren Einheit 20 weiterverarbeitet wird, sodass die Batterie 14 geladen wird.

Wenn die Batterie 14 ausreichend geladen ist, oder das Hörgerät 4 von dem Ladegerät 20 entfernt wird, wird ein sechster Arbeitsschritt 78 durchgeführt, und die Spannungsquelle 26 stillgesetzt. Somit ist der Ladevorgang 76 beendet. Sobald das Hörgerät 4 erneut an das Ladegerät 22 angenähert wird oder die Batterie 14 zumindest teilweise entladen ist, wird erneut der fünfte Arbeitsschritt 74 durchgeführt. Somit wird bei dem Verfahren 60 lediglich einmalig derjenige Zustand 66 bestimmt, bei dem der Wert 70 maximal ist, und der Einstellpfad 38 entsprechend eingestellt. Dahingegen werden bei dem Verfahren 60 mehrere Ladevorgängen 76 durchgeführt.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebene Einzelmerkmale auch auf andere Weise miteinander kombinierbar, ohne den Gegenstand der Erfindung zu verlassen.

### Bezugszeichenliste

- 2: System
- 4: Hörgerät
- 6: Mikrofon
- 8: Hörgerätegehäuse
- 10: Signalverarbeitungseinheit
- 12: Hörer
- 14: Batterie
- 16: Ladeeinheit
- 18: Empfangsspule
- 20: weitere Einheit
- 22: induktives Ladegerät
- 24: Gehäuse
- 26: Spannungsquelle
- 28: Schwingkreis
- 30: Ladespule
- 32: Kapazität
- 34: Hauptkondensator
- 36: Nebenkondensator
- 38: Einstellzweig
- 40: Einstellpfad
- 42: Hilfskondensator
- 44: Schaltelement
- 46: Messchaltung
- 48: Spannungsteiler
- 50: Widerstand
- 52: Diode
- 54: Messwiderstand
- 56: Messkondensator
- 58: Steuergerät
- 60: Verfahren
- 62: erster Arbeitsschritt
- 64: zweiter Arbeitsschritt
- 66: Zustand
- 68: dritter Arbeitsschritt
- 70: Wert
- 72: vierter Arbeitsschritt
- 74: fünfter Arbeitsschritt
- 76: Ladevorgang
- 78: sechster Arbeitsschritt

## Patentansprüche

1. Verfahren (60) zum Betrieb eines induktiven Ladegeräts (22) eines Hörgeräts (4), welches eine Spannungsquelle (26) und einen damit verbundenen Schwingkreis (28) mit einer Ladespule (30) und einer Kapazität (32) umfasst, die einen Hauptkondensator (34) und einen hierzu parallel geschalteten Einstellzweig (38) aufweist, wobei
- für unterschiedliche Zustände (66) des Einstellzweigs (38), die sich anhand der Kapazität des Einstellzweigs (38) unterscheiden, ein einen durch die Ladespule (30) resultierenden elektrischen Strom kennzeichnenden Wert (70) erfasst wird,
- derjenige Zustand (66) bestimmt wird, bei dem der zu dem Wert (70) korrespondierende elektrische Strom maximal ist, und
- der Einstellzweig (38) entsprechend des Zustands (66) eingestellt wird.

2. Verfahren (60) nach Anspruch 1,
**dadurch gekennzeichnet,**
**dass** nach dem Einstellen ein Ladevorgang (76) des Hörgeräts (4) gestartet wird.

3. Induktives Ladegerät (22), das eine Spannungsquelle (26) und einen damit verbundenen Schwingkreis (28) mit einer Ladespule (30) und einer Kapazität (32) umfasst, die einen Hauptkondensator (34) und einen hierzu parallel geschalteten Einstellzweig (38) aufweist, und das gemäß einem Verfahren (60) nach Anspruch 1 oder 2 betrieben ist.

4. Induktives Ladegerät (22) nach Anspruch 3,
**dadurch gekennzeichnet,**
**dass** der Einstellzweig (38) einen Einstellpfad (40) mit einem Hilfskondensator (42) und einem damit elektrisch in Reihe geschalteten Schaltelement (44) aufweist, wobei bei zumindest zwei der Zustände (66) der Schaltzustand des Schaltelements (44) unterschiedlich ist.

5. Induktives Ladegerät (22) nach Anspruch 4,
**dadurch gekennzeichnet,**
**dass** der Einstellzweig (38) mehrere derartige zueinander elektrisch parallel geschaltete Einstellpfad (40) aufweist.

6. Induktives Ladegerät (22) nach einem der Ansprüche 3 bis 5,
**gekennzeichnet durch**,
einen Spannungssensor zum Erfassen des Werts (70), nämlich zum Messen einer über einen Messwiderstand (54) anfallenden elektrischen Spannung, der elektrisch in Reihe mit einer gegen den Schwingkreis (28) geführten Diode (52) geschaltet ist.

7. Induktives Ladegerät (22) nach Anspruch 6,
**dadurch gekennzeichnet,**
**dass** parallel zu dem Messwiderstand (54) ein Messkondensator (56) geschaltet ist.

8. Induktives Ladegerät (22) nach Anspruch 6 oder 7,
**dadurch gekennzeichnet,**
**dass** die Diode (52) über einen Spannungsteiler (48) gegen den Schwingkreis (28) geführt ist.

9. System (2) mit einem Hörgerät (4) und einem induktiven Ladegerät (22) nach einem der Ansprüche 3 bis 8.
